# EUROPÄISCHE PATENTSCHRIFT

(11) **EP 0 809 041 B1**
(45) Veröffentlichungstag und Bekanntmachung des Hinweises auf die Patenterteilung: **10.10.2001**
(21) Anmeldenummer: 97107852.2
(22) Anmeldetag: 14.05.1997
(51) Int. Cl.: F16F 15/26, F02B 75/06

(54) **Vorrichtung zum Ausgleich von Massenmomenten an Hubkolben-Brennkraftmaschinen**
Means for equilibration of inertial torque in internal combustion engines
Dispositif d'équilibrage de torsion inertiel des moteurs à combustion interne

(30) Priorität: 20.05.1996 DE 19620233
(43) Veröffentlichungstag der Anmeldung: 26.11.1997
(73) Patentinhaber: AUDI AG, 85045 Ingolstadt (DE)
(72) Erfinder: Stähle, Hermann, 74074 Heilbronn (DE); Fröhlich, Andreas, 74906 Bad Rappenau (DE); Leitner, Peter, 85080 Gaimersheim (DE); Fleischmann, Peter, 96342 Stockheim (DE); Bandel, Clemens, 85049 Ingolstadt (DE)

(56) Entgegenhaltungen:
- EP-A- 0 754 879
- EP-A- 0 789 164
- DE-A- 3 840 307
- DE-A- 4 134 399
- GB-A- 2 228 047
- US-A- 4 703 724
- US-A- 5 535 643
- PATENT ABSTRACTS OF JAPAN vol. 010, no. 286 (M-521), 27.September 1986 & JP 61 103025 A (MAZDA MOTOR CORP), 21.Mai 1986,

## Beschreibung

Die Erfindung betrifft eine Vorrichtung zum Ausgleichen von Massenmomenten an Hubkolben-Brennkraftmaschinen, insbesondere mit V-förmiger Zylinderanordnung und 90° Zylinderwinkel, gemäß dem Oberbegriff des Patentanspruches 1.

Eine derartige Vorrichtung zeigt beispielsweise die EP 132 943 B1, bei der die etwas senkrecht unterhalb der Kurbelwelle liegende Ausgleichswelle zum Ausgleich der freien Massenmomente erster Ordnung über einen Zahnradtrieb angetrieben ist. Das Lagergehäuse der Ausgleichswelle ist an dem Zylinderkurbelgehäuse der Brennkraftmaschine befestigt, wobei die einteilige Ölwanne schließlich die Ausgleichswelle umschließt.

Ausgehend von der gattungsgemäßen Vorrichtung liegt der vorliegenden Erfindung die Aufgabe zugrunde, eine Anordnung und einen Antrieb der Ausgleichswelle zu schaffen, der baulich einfach und montagegünstig ist und der insbesondere ohne wesentiche konstruktive Änderungen des Zylinderkurbelgehäuses und des Kurbeltriebes der Brennkraftmaschine einsetzbar ist.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, die Ausgleichswelle in einem an das Kurbelgehäuse der Brennkraftmaschine anschließendem, oberen Gehäuseabschnitt der zumindest zweiteiligen Ölwanne anzuordnen. Die Ausgleichswelle wird also nicht unmittelbar an das Zylinderkurbelgehäuse angebunden, sondern in einem oberen Gehäuseabschnitt der unterhalb des Zylinderkurbelgehäuses liegenden Ölwanne, bevorzugt in einem mit der Ölwanne verschraubbaren Lagergehäuse aufgenommen.

Der Einsatz eines Kettentriebes zum Antrieb der Ausgleichswelle ermöglicht ferner eine seitliche Anordnung der Ausgleichswelle, wodurch die Bauhöhe der Brennkraftmaschine bei Verwendung im Durchmesser relativ kleiner Kettenräder nur geringfügig zunimmt. Über den Kettentrieb kann ferner eine in der Ölwanne angeordnete Ölpumpe mitangetrieben werden.

Die Ausgleichswelle mit deren Lagergehäuse kann in dem oberen Gehäuseabschnitt der Ölwanne als eine Baueinheit vormontiert und an das Zylinderkurbelgehäuse der Brennkraftmaschine angebaut werden.

Wenn das Kettenrad z. B. zum Antrieb der Ausgleichswelle nur kraftschlüssig mit der Ausgleichswelle verbunden ist, so kann diese bei der Montage in einer definierten Phasenlage zur Kurbelwelle arretiert, anschließend der Kettentrieb montiert und schließlich durch Herstellung der kraftschlüssigen Verbindung eine definierte Zuordnung Kurbelwelle zur Ausgleichswelle unabhängig von Herstellungstoleranzen hergestellt werden.

Ein Ausführungsbeispiel der Erfindung ist im folgenden mit weiteren Einzelheiten näher beschrieben. Die schematische Zeichnung zeigt in
- Fig. 1: einen senkrechten Teilschnitt in der Kettentriebsebene durch eine nur im Bereich des Zylinderkurbelgehäuses und der Ölwanne dargestellte V6-Hubkolben-Brennkraftmaschine mit 90° Zylinderwinkel;
- Fig. 2: einen Längsschnitt gemäß Linie II-II der Fig. 1 durch die Ölwanne entlang der Drehachse der Ausgleichswelle;
- Fig. 3: einen Schnitt entlang der Linie III-III durch die Lagerung der Ausgleichswelle in deren Lagergehäuse;
- Fig. 4: einen Schnitt gemäß Linie IV-IV durch die Ölwanne und das Lagergehäuse der Ausgleichswelle im Bereich eines Ausgleichsgewichtes;
- Fig. 5: einen weiteren Schnitt durch das Lagergehäuse entlang der Linie V-V der Fig. 1; und
- Fig. 6: einen Längsschnitt gemäß Linie VI-VI der Fig. 1 durch den Kettentrieb mit teilweise dargestelltem Ölpumpengehäuse und angebautem Kettenschutz.

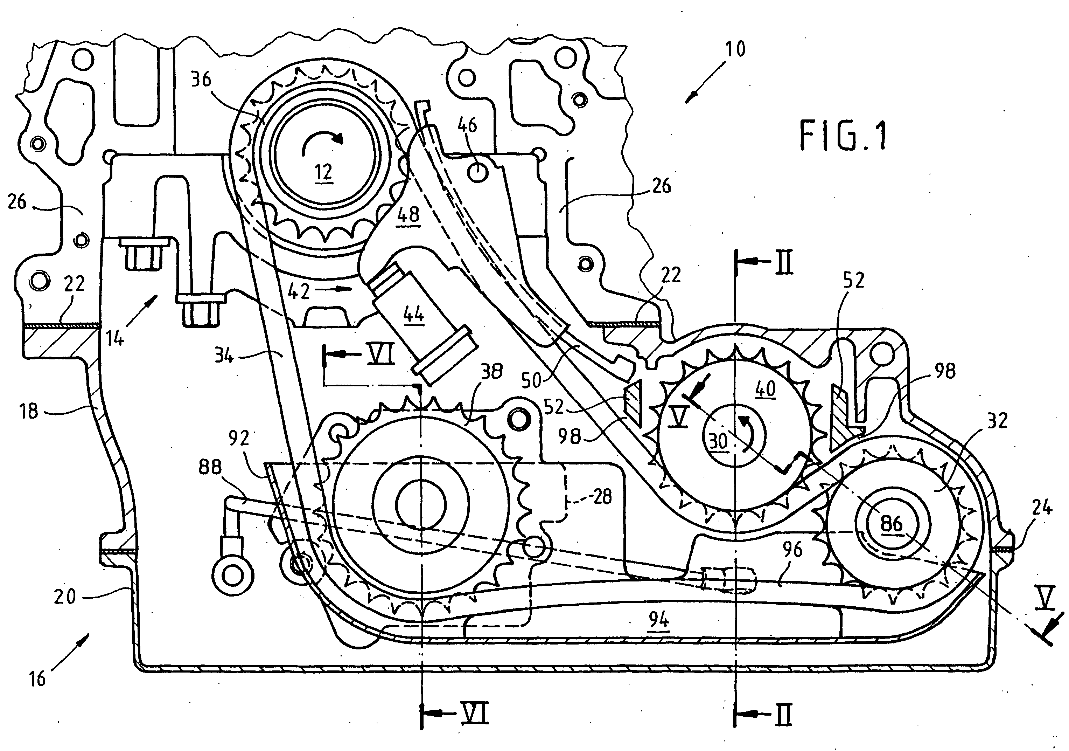

In der Fig. 1 ist mit 10 der untere Abschnitt des Zylinderkurbelgehäuses einer V6-Hubkolben-Brennkraftmaschine mit einem Zylinderwinkel von 90° bezeichnet, in dem in bekannter Weise eine Kurbelwelle 12 in Hauptlagern 14 drehbar gelagert ist. Soweit nicht beschrieben ist die Brennkraftmaschine herkömmlicher Bauart.

Die an das Zylinderkurbelgehäuse 10 nach unten anschließende Ölwanne 16 ist zweiteilig ausgeführt, mit einem oberen Gehäuseabschnitt 18 und einem unteren Deckel 20. Der Gehäuseabschnitt 18 ist mittels nicht dargestellter Schrauben über eine Dichtfläche 22 am Zylinderkurbelgehäuse 10 befestigt; ferner sind der Deckel 20 und der Gehäuseabschnitt 18 mittels nicht dargestellter Schrauben im Bereich der Dichtfläche 24 aneinander befestigt. Ein nicht dargestellter Steuergehäusedeckel ist auf die stirnseitige Dichtfläche 26 des Zylinderkurbelgehäuses 10 aufgeschraubt.

In dem oberen Gehäuseabschnitt 18 der Ölwanne 16 ist etwa senkrecht darunter eine Ölpumpe 28 und seitlich daneben eine Ausgleichswelle 30 und ein Umlenk-Kettenrad 32 angeordnet.

Der Antrieb der Ölpumpe 28 und der Ausgleichswelle 30 erfolgt über einen Kettentrieb mit einer Kette 34, einem antreibenden Kettenrad 36 auf der Kurbelwelle 12, einem Kettenrad 38 der Ölpumpe 28, dem Umlenk-Kettenrad 32 und einem weiteren Kettenrad 40 auf der Ausgleichswelle 30.

In dem nicht dargestellten Steuergehäusedeckel ist ein hydraulischer Kettenspanner 42 angeordnet, der über ein teleskopisch verschiebbares Spannglied 44, einen über eine Achse 46 schwenkbaren Umlenkhebel 48 und eine Spannschiene 50 die erforderliche Vorspannung der Kette 34 herstellt.

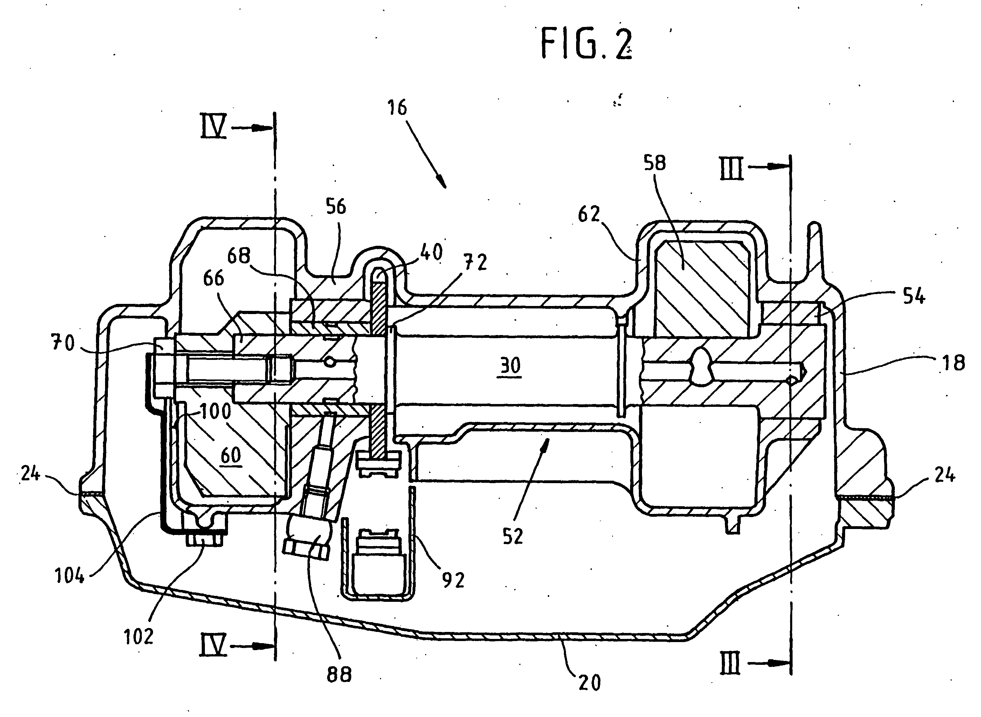

Die Ausgleichswelle 30 (vgl. Fig. 2 bis 4) ist in einem Lagergehäuse 52 in darin ausgebildeten Lageraugen 54,56 drehbar gelagert, wobei die Ausgleichswelle 30 mit dem beiden Ausgleichsgewichten 58,60 teilweise von dem Lagergehäuse 52 und teilweise von der entsprechend geformten Gehäusewand 62 des Gehäuseabschnittes 18 der Ölwanne 16 dicht umschlossen ist (zur Vermeidung von Ölpanschen).

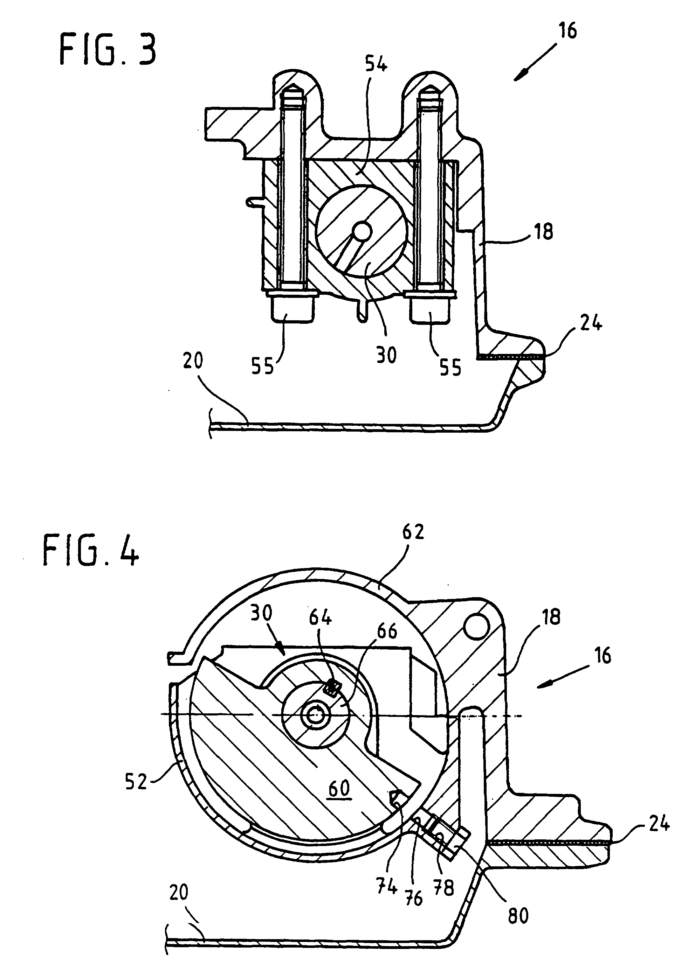

Das Lagergehäuse 52 ist im Bereich der Lageraugen 54,56 mittels Schrauben 55 (vgl. Fig. 3 anhand der Lagerstelle 54) mit dem oberen Gehäuseabschluß 18 der Ölwanne 16 verschraubt.

Während das Ausgleichsgewicht 58 mit der Ausgleichswelle 30 durch eine radial ausgerichtete Schraube (nicht dargestellt) verschraubt ist, ist das um 180° versetzt angeordnete Ausgleichsgewicht 60 über eine Scheibenfeder 64 in seiner Drehlage gesichert wie folgt montiert:

Zunächst ist auf den Wellenstummel 66 der Ausgleichswelle 30 das Kettenrad 40 verdrehbar aufgesteckt, anschließend folgt eine Lagerhüse 68 und dann das Ausgleichsgewicht 60; die gesamte Anordnung ist schließlich mittels einer stirnseitig eingeschraubten Zentralschraube 70 kraftschlüssig gehalten, wobei das Kettenrad 40 zwischen der Lagerhülse 58 und dem Wellenbund 72 der Ausgleichswelle 30 eingespannt ist.

In dem Ausgleichsgewicht 60 (vgl. Fig. 4) ist eine radial verlaufende Bohrung 74 vorgesehen, die bei einer definierten Drehstellung der Ausgleichswelle 30 mit einer Bohrung 76 mit einem Gewindeabschnitt 78 im Lagergehäuse 52 fluchtet, so daß bei Einschrauben eines stiftförmigen Montagewerkzeuges (nicht dargestellt) die Ausgleichswelle relativ zum Lagergehäuse 52 bzw. zur Ölwanne 16 arretierbar ist. Die Bohrung 76 wird nach erfolgter Montage und Herausnehmen des Montagewerkzeuges mit einer Blindschraube 80 verschlossen.

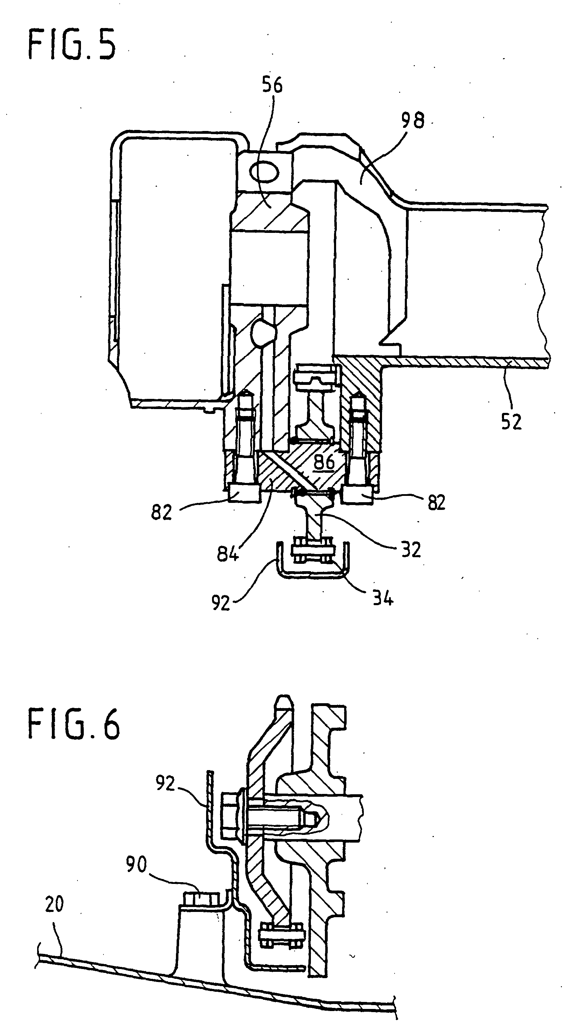

Wie Fig. 5 zeigt, ist an das Lagergehäuse 52 mit zwei Schrauben 82 ein Lagerbock 84 mit einem rotationssymetrischen Achsabschnitt 86 angeschraubt, auf dem das Umlenk-Kettenrad 32 drehbar gelagert ist.

Die Lagerstellen 54,56,86 für die Ausgleichswelle 30 und das Umlenk-Kettenrad 32 sind über in der Ausgleichswelle 30 und im Lagergehäuse 52 bzw. im Lagerbock 84 eingearbeitete Schmierölkanäle (vgl. Fig. 2, 3 und 5) und über eine externe Schmierölleitung 88 an das übrige Druckumlauf-Schmierölsystem der Brennkraftmaschine angeschlossen.

Ein an dem Deckel 20 der Ölwanne 16 mit Schrauben 90 befestigter Kettenschutz 92 aus Kunststoff, der die Kette 34 teilweise etwa bis zur Ölstandhöhe in der Ölwanne 16 abdeckt, weist zugleich eine Ketten-Führungsschiene 94 (vgl. Fig. 1) auf, die Kettenschwingungen im Bereich des freien Kettentrums 96 zwischen dem Kettenrad 38 an der Ölpumpe 28 und dem Umlenk-Kettenrad 32 unterdrückt.

Der beschriebene Kettentrieb (Fig. 1) ist etwa dreieckförmig ausgerichtet, wobei die Ölpumpe 28 mit dem Kettenrad 38 etwa senkrecht unterhalb der Kurbelwelle 12 liegt, die Ausgleichswelle 30 und das Umlenk-Kettenrad 32 hingegen seitlich und etwa in Höhe der Ölpumpe 28 in der Ölwanne 16 angeordnet sind. Dabei ist die Ausgleichswelle 30 so positioniert, daß deren Drehachse etwa auf einer Verbindungsgeraden zwischen der Kurbelwellen-Drehachse und der Drehachse des Umlenk-Kettenrades 32 liegt, wobei deren Kettenrad 40 von der Kettenrückseite gegenläufig angetrieben ist. Zum Freigang der Kette 34 ist dazu in dem Lagergehäuse 52 eine entsprechende Ausnehmung 98 vorgesehen. Schließlich ist an der für die Zugänglichkeit der Zentralschraube 70 erforderlichen Öffnung 100 im Lagergehäuse 52 mittels einer Schraube 102 ein Abdeckblech 104 montiert, das ein Vollaufen mit Schmieröl des für das Ausgleichsgewicht 60 vorgesehenen Freiraumes innerhalb des Lagergehäuses 52 verhindert.

Die Montage der beschriebenen Vorrichtung zum Ausgleich der freien Massenmomente erster Ordnung ist im wesentlichen wie folgt:

Es sei angenommen, der Kurbeltrieb der Brennkraftmaschine mit der Kurbelwelle 12 und dem Kettenrad 36 ist montiert und es ist die Ölpumpe 28 mit dem Kettenrad 38 ebenfalls an dem Zylinderkurbelgehäuse 10 angeschraubt (auf der Zeichnung nicht ersichtlich).

Anschließend wird der obere Gehäuseabschnitt 18 der Ölwanne 16 mit der Ausgleichswelle 30 komplettiert, wobei das Lagergehäuse 52 mit der montierten Ausgleichswelle 30 in dem Gehäuseabschnitt 18 mittels der Schrauben 55 befestigt wird. Dabei ist das Abdeckblech 104 noch nicht montiert und es ist die Zentralschraube 70 noch gelockert, so daß sich das Kettenrad 40 relativ zur Ausgleichswelle 30 verdrehen kann. Mittels des nicht dargestellten Montagewerkzeuges ist ferner die Ausgleichswelle 30 gegenüber dem Lagergehäuse 52 arretiert, so daß sie in einer definierten Phasenlage gehalten ist. Gleiches gilt für die Kurbelwelle 12, die ebenfalls mittels einer ähnlichen Vorrichtung in einer definierten Phasenlage zu einem Referenzzylinder positioniert ist.

Nach dem Aufsetzen des so vormontierten Gehäuseabschnittes 18 auf das Zylinderkurbelgehäuse 10 der Brennkraftmaschine und dessen entsprechender Befestigung wird die Kette 34 auf die Kettenräder 36,38,40 aufgelegt und anschließend das Umlenk-Kettenrad 32 mit dem Lagerbock 84 an dem Lagergehäuse 52 angeschraubt.

Nunmehr wird der nicht dargestellte Steuergehäusedeckel mit dem hydraulischen Kettenspanner 42 montiert, gleiches gilt für die externe Schmierölleitung 88.

Nach der soweit beschriebenen Fertigmontage des Kettentriebes wird die Zentralschraube 70 angezogen, wodurch nunmehr über die Kette 34 die definierte Phasenlage zwischen Kurbelwelle 12 und Ausgleichswelle 30 unter Ausschaltung jegliche Toleranzen beibehalten wird. Das Kettenrad 40 auf der Ausgleichswelle 30 ist nunmehr kraftschlüssig unverdrehbar gehalten. Anschließend wird das Abdeckblech 104 montiert und das arretierende Montagewerkzeug entfernt, sowie die Blindschraube 80 in die Bohrung 76,78 eingeschraubt.

Als letzter Montageschritt wird der Deckel 20 der Ölwanne anmontiert, wobei der an dem Deckel 20 befestigte Kettenschutz 92 mit der Ketten-Führungsschiene 94 ebenfalls bereits vormontiert ist und mit dem Aufsetzen des Dekkels 20 das freie Kettentrum 96 mit leichter Vorspannung beaufschlagt. Nach dem Befestigen des Deckels 20 an dem oberen Gehäuseabschnitt 18 ist die Montage der vorbeschriebenen Vorrichtung abgeschlossen.

## Patentansprüche

1. Vorrichtung zum Ausgleichen von Massenmomenten an Hubkolben-Brennkraftmaschinen, insbesondere mit V-förmiger Zylinderanordnung und 90° Zylinderwinkel, mit einer von der Kurbelwelle angetriebenen Ausgleichswelle mit mehreren Ausgleichsgewichten, wobei die Ausgleichswelle in der Ölwanne der Brennkraftmaschine angeordnet ist, **dadurch gekennzeichnet, daß** die Ausgleichswelle (30) in einem an das Kurbelgehäuse (10) der Brennkraftmaschine anschließenden, oberen Gehäuseabschnitt (18) der zumindest zweiteiligen Ölwanne (16) gelagert ist.

2. Vorrichtung nach Anspruch 1, **dadurch gekennzeichnet, daß** die Ausgleichswelle (30) in einem Lagergehäuse (52) gelagert ist, welches mit dem oberen Gehäuseabschnitt (18) verschraubt ist.

3. Vorrichtung nach den Ansprüchen 1 und 2, **dadurch gekennzeichnet, daß** die Ausgleichswelle (30) über eine Kette (34) angetrieben ist, wobei das antreibende und/oder angetriebene Kettenrad (40) kraftschlüssig mit der korrespondierenden Welle (30) verbunden und dementsprechend in seiner Drehlage verstellbar ist.

4. Vorrichtung nach Anspruch 3, **dadurch gekennzeichnet, daß** zumindest die das verstellbare Kettenrad (40) tragende Welle (30) bei der Montage des Kettentriebs in einer definierten Drehstellung arretierbar ist.

5. Vorrichtung nach den Ansprüchen 1 - 3, **dadurch gekennzeichnet, daß** an dem Lagergehäuse (52) der Lagerbock (84) eines Umlenk-Kettenrades (32) befestigt ist.

6. Vorrichtung nach einem oder mehreren der Ansprüche 1 - 5, **dadurch gekennzeichnet, daß** über die Kette (34) und ein weiteres Kettenrad (38) ferner eine in der Ölwanne (16) angeordnete Ölpumpe (28) der Brennkraftmaschine angetrieben ist.

7. Vorrichtung nach einem oder mehreren der vorhergehenden Ansprüche, **dadurch gekennzeichnet, daß** der Kettentrieb im wesentlichen dreieckförmig angeordnet ist, wobei die Eckpunkte durch das antreibende Kettenrad (36) auf der Kurbelwelle (12), das angetriebene Kettenrad (38) der Ölpumpe (28) und das Umlenk-Kettenrad (32) gebildet sind und das zwischen dem Kettenrad (36) auf der Kurbelwelle (12) und dem Umlenk-Kettenrad (32) liegende Kettenrad (40) der Ausgleichswelle (30) etwa in einer Linie mit diesen Kettenrädern (36,32) liegt und durch Eingriff auf der Kettenrückseite gegenläufig angetrieben ist.

8. Vorrichtung nach einem oder mehreren der Ansprüche 1 - 7, **dadurch gekennzeichnet, daß** an einem stirnseitigen Steuergehäusedeckel der Brennkraftmaschine ein hydraulischer Kettenspanner (42) zum Spannen der Kette (34) angeordnet ist.

9. Vorrichtung nach einem oder mehreren der Ansprüche 1 - 8, **dadurch gekennzeichnet, daß** an dem unteren Deckel (20) der Ölwanne (16) eine Führungsschiene (94) für das über dem Deckel (20) liegende Kettentrum (96) befestigt ist.

10. Vorrichtung nach Anspruch 9, **dadurch gekennzeichnet, daß** die Führungsschiene (94) einteilig mit einem im Ölsumpf der Ölwanne (16) liegendem, die unteren Kettenräder (38,32) teilweise abdeckendem Kettenschutz (92) ausgebildet ist.

## Claims

1. Means for equilibration of inertial torques in internal combustion engines, in particular with V-shaped cylinder arrangement and 90° cylinder angle, comprising an equilibration shaft with a plurality of equilibration weights which is driven by the crankshaft, and the equilibration shaft is arranged in the oil sump of the internal combustion engine, **characterised in that** the equilibration shaft (30) is mounted in an upper housing section (18) of the at least two-part oil sump (16) which is adjacent the crank casing (10) of the internal combustion engine.

2. Means according to Claim 1, **characterised in that** the equilibration shaft (30) is mounted in a mounting housing (52) which is bolted to the upper housing section (18).

3. Device according to Claims 1 and 2, **characterised in that** the equilibration shaft (30) is driven via a chain (34), and the driving and/or driven chainwheel (40) is positively connected to the corresponding shaft (30) and accordingly adjustable in its rotary position.

4. Means according to Claim 3, **characterised in that** at least the shaft (30) which carries the adjustable chainwheel (4) is arrestible in a defined rotary position during assembly of the chaindrive.

5. Means according to Claims 1 - 3, **characterised in that** the mounting bock (84) of a diverting chainwheel (32) is attached to the mounting housing (52).

6. Means according to one or more of Claims 1 - 5, **characterised in that** additionally an oil pump (28) of the internal combustion engine arranged in the oil sump (16) is driven via the chain (34) and an additional chainwheel (38).

7. Means according to one or more of the above claims,
**characterised in that** the chaindrive is essentially triangularly arranged, and the corner points are established by the driving chainwheel (36) on the crankshaft (12), the driven chainwheel (38) of the oil pump (28) and the diverting chainwheel (32), and the chainwheel (40) of the equilibration shaft (30) located between the chainwheel (36) on the crankshaft (12) and the diverting chainwheel (32) lies approximately in a line with these chainwheels (36, 32) and is counter-directionally driven by engagement on the rear of the chain.

8. Means according to one or more of Claims 1 - 7, **characterised in that** a hydraulic chain tensioner (42) for tensioning the chain (34) is arranged at the end side of the control housing cover of the internal combustion engine.

9. Means according to one or more of Claims 1 - 8, **characterised in that** a guide rail (94) for the chain suspension (96) located above the cover (20) is attached to the lower cover (20) of the oil sump (16).

10. Means according to Claim 9, **characterised in that** the guide rail (94) is integrated with a chain guard (92) which is located in the oil of theoil sump (16) and partially covers the lower chainwheels (38, 32).

## Revendications

1. Dispositif d'équilibrage des moments d'inertie sur des moteurs à combustion interne à pistons à mouvement alternatif, en particulier avec un agencement des cylindres en forme de V et un angle de 90° entre les rangées de cylindres, avec un arbre d'équilibrage entraîné par le vilebrequin, comportant plusieurs masses d'équilibrage, l'arbre d'équilibrage étant disposé dans le carter d'huile du moteur à combustion interne, **caractérisé en ce que** l'arbre d'équilibrage (30) est monté dans un tronçon de carter supérieur (18), se raccordant au carter de vilebrequin (10) du moteur à combustion interne, du carter d'huile (16) réalisé au moins en deux parties.

2. Dispositif selon la revendication 1, **caractérisé en ce que** l'arbre d'équilibrage (30) est monté dans un carter de palier (52) vissé au tronçon de carter supérieur (18).

3. Dispositif selon les revendications 1 et 2, **caractérisé en ce que** l'arbre d'équilibrage (30) est entraîné par l'intermédiaire d'une chaîne (34), la roue à chaîne (40) d'entraînement et/ou entraînée étant reliée, par une liaison par ajustement de forme, à l'arbre (30) correspondant et, par conséquent, sa position en rotation étant réglable.

4. Dispositif selon la revendication 3, **caractérisé en ce qu'**au moins l'arbre (30), portant la roue à chaîne (40) réglable, est bloquable en une position de rotation définie lors du montage de la transmission à chaîne.

5. Dispositif selon les revendications 1 à 3, **caractérisé en ce que** le bloc-palier (84) d'une roue à chaîne de renvoi (32) est fixé au carter de palier (52).

6. Dispositif selon une ou plusieurs des revendications 1 à 5, **caractérisé en ce qu'**une pompe à huile (28) du moteur à combustion interne, disposée dans le carter d'huile (16), est en outre entraînée par l'intermédiaire de la chaîne (34) et d'une autre roue à chaîne (39).

7. Dispositif selon l'une ou plusieurs des revendications précédentes, **caractérisé en ce que** la transmission à chaîne est disposée sensiblement en formant un triangle, les sommets étant constitués par la roue à chaîne d'entraînement (36) montée sur le vilebrequin (12), la roue à chaîne entraînée (38) de la pompe à huile (28) et la roue à chaîne de renvoi (32), et la roue à chaîne (40), placée entre la roue à chaîne (36), montée sur le vilebrequin (12), et la roue à chaîne de renvoi (32), de l'arbre d'équilibrage (30), étant placée à peu près en ligne avec ces roues à chaînes (36, 32) et entraînée en sens inverse, par emprise sur la face dorsale de la chaîne.

8. Dispositif selon l'une ou plusieurs des revendications 1 à 7, **caractérisé en ce qu'**un tendeur de chaîne (42) hydraulique, prévu pour tendre la chaîne (34), est disposé sur un couvercle de carter de commande, situé côté frontal, du moteur à combustion interne.

9. Dispositif selon l'une ou plusieurs des revendications 1 à 8, **caractérisé en ce qu'**une glissière de guidage (94), prévue pour le tronçon de chaîne (96) situé au-dessus du couvercle (20), est fixée sur le couvercle inférieur (20) du carter d'huile (16).

10. Dispositif selon revendication 9, **caractérisé en ce que** la glissière de guidage (94) est réalisée d'une seule pièce avec une protection de chaîne (92), placée dans la cuvette à huile du carter d'huile (16), couvrant partiellement les roues à chaîne inférieures (38, 32).
